# EUROPEAN PATENT APPLICATION

(11) **EP 2 060 683 A2**
(43) Date of publication of application: **20.05.2009**
(21) Application number: 08019664.5
(22) Date of filing: 11.11.2008
(51) Int. Cl.: E03D 5/00

(54) **Automated flush system**

(30) Priority: 16.11.2007 GB 0722520
(71) Applicant: Vectair Systems Limited, Kingsland Business Park Basingstoke Hampshire RG24 8LJ (GB)
(72) Inventor: Wonnacott, Paul, Esher, KT10 8LH (GB); Teeling, Mathew, Kingston Upon Thames KT2 5EE (GB)
(74) Representative: Downing, Michael Philip

(57) **Abstract**

An automated flushing system is described that can be installed in a manner that is both proximate a plumbing system and also accessible for maintenance and inspection. This comprises (i) a receiver unit comprising a radio-frequency receiver and an output for an actuator to enable flow of flush water when a flush signal is received via the radio-frequency receiver, and (ii) a transmitter unit comprising a radio-frequency transmitter compatible with the radio-frequency receiver of the receiver unit, and a control means for sending flush signals via the radio-frequency transmitter. The receiver unit can further comprise a timer, and be adapted to disable flow of flush water after the timer indicates that a preset period has passed since the receiver unit enabled flow of flush water. The preset period can be communicated to the receiver unit by the transmitter unit. The transmitter unit can be adapted to permit a user to initiate a flush signal and to detect an input from the user, thereby to establish the preset period. The transmitter unit can comprise a timer, and be adapted to send a flush signal after the timer indicates that a preset period has passed since the transmitter unit last sent a flush signal. The transmitter unit can allow for periods when the convenience is expected to be active or inactive by lengthening the preset period outside normal hours. A sensor can be provided for detecting a user and communicating with the transmitter unit, in which case the transmitter unit is preferably adapted to send a flush signal after the sensor is activated, such as once a preset period has elapsed after the sensor is activated. The output of such a sensor can be used to switch on a timer switch that supplies power to other apparatus, such as an electric dryer.

## Description

### FIELD OF THE INVENTION

The present invention relates to an automated flush system for use in restrooms and like conveniences.

### BACKGROUND ART

Controlling the flushing of urinals is a problematic subject. Flushing is clearly necessary, in order to maintain the cleanliness of the urinals and preserve the atmosphere of the conveniences concerned. However, urinals in at least the United Kingdom do not generally have user-operable flushing mechanisms fitted to allow selective flushing after each use. Urinals in mainland Europe often have such mechanisms, but users may forget and there may be long periods of non-use (such as overnight) during which relatively infrequent flushing is advisable in order to maintain sanitary conditions, but there is no-one present to do so. Such mechanisms would also of little use in the UK, since local users are not in the habit of flushing a urinal after each use.

An automated system is therefore necessary. Existing urinal installations usually employ a timer system, whereby a cistern will empty after a preset period of time in order to flush one or more urinals. The time period needs to be chosen carefully, however, to balance the need to provide an adequate flushing frequency against the likelihood of wasting water. Generally, such devices operate 24/7 and, therefore water is wasted through excessive flushing at times when the convenience is not used, such as outside office hours or when a facility is closed.

An alternative is therefore to use sensor-based flushing systems such as the SENSAFLUSH^{™} system provided by the applicants, in which movement sensors detect the presence of a user and flush the urinal(s) accordingly. Such systems rely on the presence of sensors that are connected to control units that are, in turn, able to operate solenoid valves fitted to the plumbing system. These systems tend to be expensive, both to install and to maintain. Maintenance costs are increased through the need to locate the control units proximate the plumbing system, which tends to be concealed in order to prevent damage through vandalism and the like and in order to maintain the aesthetic quality of the surroundings. The control units could of course be located so as to provide ease of access for maintenance, but this will generally involve an increased installation cost.

### SUMMARY OF THE INVENTION

The present invention seeks to alleviate such difficulties by providing for an automated flushing system that can be installed in a manner that is both proximate a plumbing system and also accessible for maintenance and inspection.

The present invention therefore provides a flush control system comprising (i) a receiver unit comprising a radio-frequency receiver and an output for an actuator to enable flow of flush water when a flush signal is received via the radio-frequency receiver, and (ii) a transmitter unit comprising a radio-frequency transmitter compatible with the radio-frequency receiver of the receiver unit, and a control means for sending flush signals via the radio-frequency transmitter.

The receiver unit can further comprise a timer and be adapted to disable flow of flush water after the timer indicates that a preset period has passed since the receiver unit enabled flow of flush water. This provides a failsafe mechanism for operating actuators such as solenoid valves which does not rely on receipt of a separate "stop" signal from the transmitter unit, and is therefore less likely to allow continuous flow. The receiver unit can comprise a memory adapted to retain the preset period, and the preset period can be communicated to the receiver unit by the transmitter unit via the radio-frequency transmitter and radio-frequency receiver. In a preferred arrangement, the transmitter unit is adapted to permit a user to initiate a flush signal and to then detect a subsequent input from the user, thereby to establish a time period between the initiation and the subsequent input, and to communicate the preset period to the receiver unit on the basis of the time period. This allows the user to take the transmitter unit to a location at which the flush can be seen or heard, initiate filling of the cistern, and indicate when the flush begins. The time can thus be measured by the system rather than relying on the user's guesswork.

In such an arrangement, the transmitter unit can display the measured or the preset time period to the user for adjustment before it is communicated to the receiver unit. The actual preset period can be the time period plus a preset margin.

The transmitter unit can comprise a timer, and be adapted to send a flush signal after the timer indicates that a preset period has passed since the transmitter unit last sent a flush signal. A clock can be used as the timer, in which case we also prefer that the transmitter unit has a memory in which is stored a start time of day, an end time of day, a first preset period and a second preset period, and the transmitter unit is adapted to (a) during the time period running from the start time to the end time, send a flush signal after the timer indicates that the first preset period has passed since the transmitter unit sent a flush signal, and (b) during the time period running from the end time to the start time, send a flush signal after the timer indicates that the second preset period has passed since the transmitter unit sent a flush signal. This allows for periods when the convenience is expected to be active or inactive. For example, during the daytime periods for an office or school, there is expected to be a greater level of activity and a more frequent routine flush can be allowed for. During the night, substantially no activity might be expected and only an infrequent flush will be required.

A sensor can be provided for detecting a user and communicating with the transmitter unit, in which case the transmitter unit is preferably adapted to send a flush signal after the sensor is activated. This might be (for example) once a preset period has elapsed after the sensor is activated. This ensures that flushing takes place after use of the conveniences.

The output of such a sensor can be used advantageously elsewhere in the restroom. For example, electric hand dryers will often remain in a standby state waiting to be triggered. These can be switched on via a timer switch that is activated when a user is detected. As a result, many hours of standby time for the dryers can be eliminated, with concomitant reductions in energy use and carbon footprint.

Thus, in its preferred forms, the invention provides an automated flush system that notes the arrival of a user, brings other equipment off standby, allows a period of time for them to complete their visit, flushes the urinal(s) automatically using only enough water to trigger the flush, and then waits for a further user. If none arrive within a set period, a further flush is carried out to maintain the sanitary state of the restroom. Routine flushing then drops to a lower level while the premises in which the restroom is located are closed.

### BRIEF DESCRIPTION OF THE DRAWINGS

An embodiment of the present invention will now be described by way of example, with reference to the accompanying figures in which;
Figure 1 shows front and rear perspective views of a receiver (Rx) unit and mounting cradle according to the present invention and the associated solenoid valve;
Figure 2 shows front and rear perspective views of a transmitter (Tx) unit and mounting cradle according to the present invention and the associated remote sensor;
Figure 3 shows a view from the front of an arrangement of a Tx and an Rx unit in a conventional UK urinal convenience;
Figure 4 shows a sectional view of an arrangement of a Tx and an Rx unit in a conventional UK urinal convenience;
Figure 5 shows a view from the rear of a Tx unit separate from its cradle;
Figure 6 shows a view from the front of a Tx unit as initially supplied;
Figure 7 shows a view from the rear of an Rx unit separate from its cradle;
Figures 8a to 8q show the steps in programming the Tx unit;
Figure 9 shows the default screen image of the Tx unit when running; and
Figures 10a to 10f show the sequential stages of operation of the Tx unit when running.

### DETAILED DESCRIPTION OF THE EMBODIMENTS

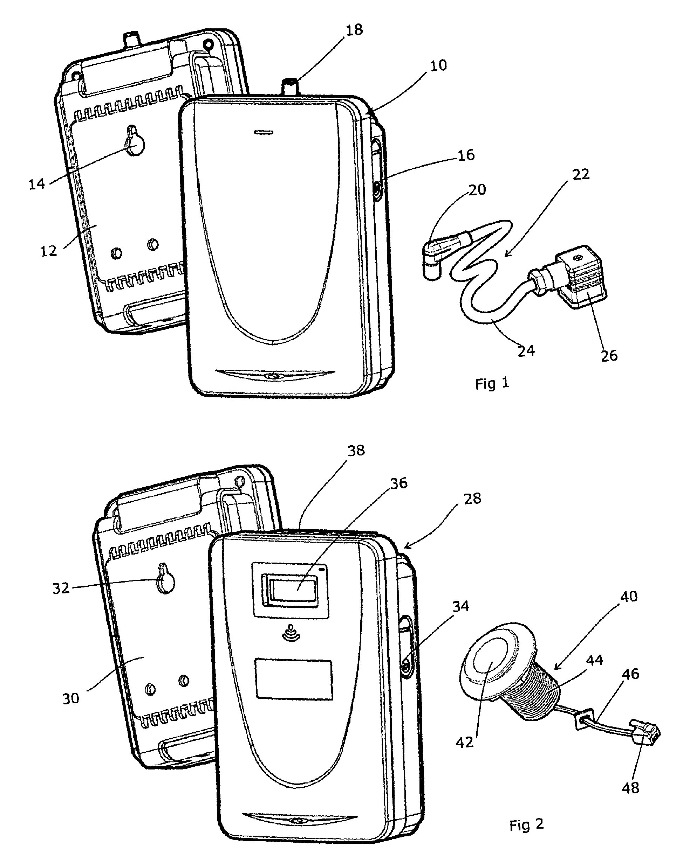

Figures 1 and 2 show views of the receiver and transmitter units respectively. Referring to figure 1 which shows the receiver unit, this comprises a detachable encapsulated unit 10 that is supported in a cradle 12. The cradle 12 has apertures 14 of a generally known design to enable the cradle to be permanently attached to a wall, ceiling, or other suitable surface. The receiver unit 10 then clips into the cradle 12 so that it can be retained in place over the long term but removed when necessary for inspection, maintenance, etc. The unit 10 has an external power switch 16 and a socket 18 to which can be attached the plug 20 of a solenoid valve unit 22. This comprises a plug 20 from which extends a short length of cable 24 ending in a connector 26 for attachment to a solenoid valve in order to allow it to control flow of water into a cistern.

Figure 2 shows the transmitter unit 28 which, like receiver unit 10, is associated with a cradle 30 having suitable apertures 32 for attachment to a wall, ceiling, or similar surface. Thus, the cradle 30 allows the transmitter unit 28 to be held in place for as long as needed prior to being moved for adjustment, maintenance, etc. The transmitter unit 28 has a power switch 34, together with a display 36 on a front face and other controls on a rear face thereof (to be described later). When the transmitter unit 28 is fitted in the cradle 30 (as shown in figure 2), the controls on the rear face thereof are concealed and therefore partially protected from tampering.

A plurality of sockets 38 on an edge of the transmitter unit 28 allow remote sensors 40 to be attached. These comprise an infra-red detector 42 mounted on a suitable screw-threaded collar 44 so that they can be fitted in a wall, divider unit, suspended ceiling or the like. A cable 46 extends from the infra-red unit 42 and is terminated in an RJ11 connector 48 which matches the socket 38 of the transmitter unit 28.

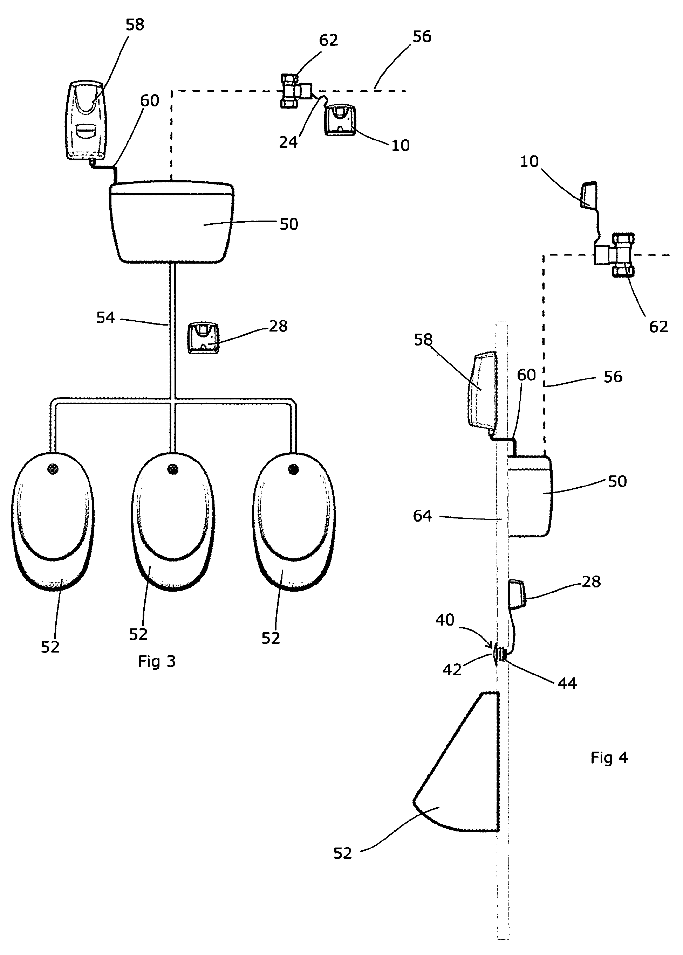

Figure 3 shows the integration of the transmitter and receiver units into a public convenience. The convenience consists of a cistern 50 which feeds a plurality of urinals 52 via a down-pipe 54 that is branched as necessary to feed each urinal. An incoming water supply 56 feeds the cistern 52, which is arranged so that when the water level reaches a pre-determined level, the cistern 50 empties and flushes the urinals 52. A timed drip-feeder 58 is arranged to supply a small metered amount of cleansing fluid into the cistern 50 via a conduit 60, to ensure that the flush water remains fresh.

The supply conduit 56 for the cistern 50 is controlled via a solenoid valve 62, which is itself controlled by the receiver unit 10. The transmitter unit 28 is located at a suitably convenient position so that its output can be checked. Communication between the transmitter unit 28 and the receiver unit 10 is via a suitable radio-frequency protocol as will be described later.

Figure 4 shows an alternative layout in which much of the plumbing is concealed. A wall 64 supports the urinals 52 on a front face thereof and the cistern 50 on a rear face thereof. It is assumed that technicians, etc have access (when required) to the rear face of the wall 64, and therefore the transmitter unit 28 is located on the rear face, as is the supply conduit 56, the solenoid valve 62 and the receiver unit 10. The dosing unit 58 is located on the front face of the wall to allow for easy refilling with fresh supplies of sanitary fluid.

To allow the transmitter unit 28 to react to the arrival of the users, the remote sensor 40 is located in the wall 64 so that the infra-red detector 42 is on the front face thereof. The collar 44 passes through the wall, and is used to secure the sensor 40 in place.

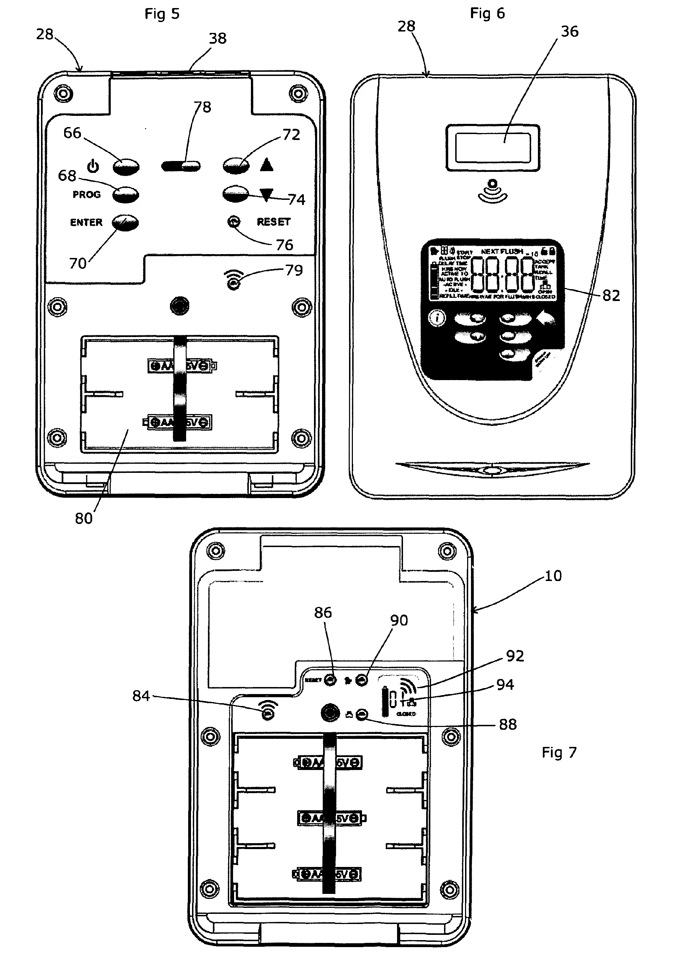

Figures 5 and 6 show the rear and front faces of the transmitter unit 28 respectively. On the rear face, there are a number of push button controls including a power button 66, a programme initiation button 68, an 'Enter' or 'Confirm' button 70 and up/down buttons 72, 74. A Reset button 76 is also provided in case the unit needs to be reset to its original condition; as is convention for reset buttons, this is made slightly more difficult to use and requires a pointing tool or the like to activate it. A lock switch 78 is provided which, when in the lock position (shown in figure 5) prevents the unit from responding to any of the buttons and prevents unintended operation. A battery compartment 80 is provided in order to receive suitable dry cells for powering the transmitter unit 28.

A 'Channel Select' button 79 is also provided; the radio-frequency link between the transmitter unit 28 and the receiver unit 10 can operate on one of a number of preset frequencies or channels so that a channel can be chosen which is free from interference with other apparatus or other transmitter & receiver units. Each time the 'Channel Select' button 79 is pressed, the transmitter unit 28 moves onto the next available channel, thereby cycling through all available channels as required.

On the front of the unit 28, shown in figure 6, the display 36 is the only functional item visible. As supplied when new, the unit carries a removable label 82 which has a summary of all the possible outputs of the display 36 together with a map showing the location of the various programming buttons 66, 68, 70, 72, 74 on the rear of the device 28. As can be seen in figure 6, the arrangement of the buttons on the label 82 is deliberately reversed so that the position as shown on the label corresponds to the positions of the buttons when being held by an operator looking at the front of the unit. Thus, the operator can programme the device whilst looking at the display 36 and holding the device with fingers reaching round to the rear, without having to repeatedly turn over the unit to view the buttons. This enables the buttons to be concealed from view when the device is in use, thereby to an extent shielding them from tampering.

Figure 7 shows the rear of the receiver unit 10. A small number of buttons are provided, including a channel selector 84, a reset button 86, a manual valve override button 88 which will cause the receiver unit 10 to open the solenoid valve regardless of signals received from the transmitter unit, for testing purposes, and an On/Off toggle 90 for a battery alarm. A small display 92 is also provided in order to allow for feedback as to the current state of the device. This shows the current RF channel 94, together with a battery output display and a solenoid valve status indicator.

The channel selector 84 is used in the same manner as the channel selector 79 on the transmitter unit 28. Clearly, a user needs to ensure that both units are set to the same channel.

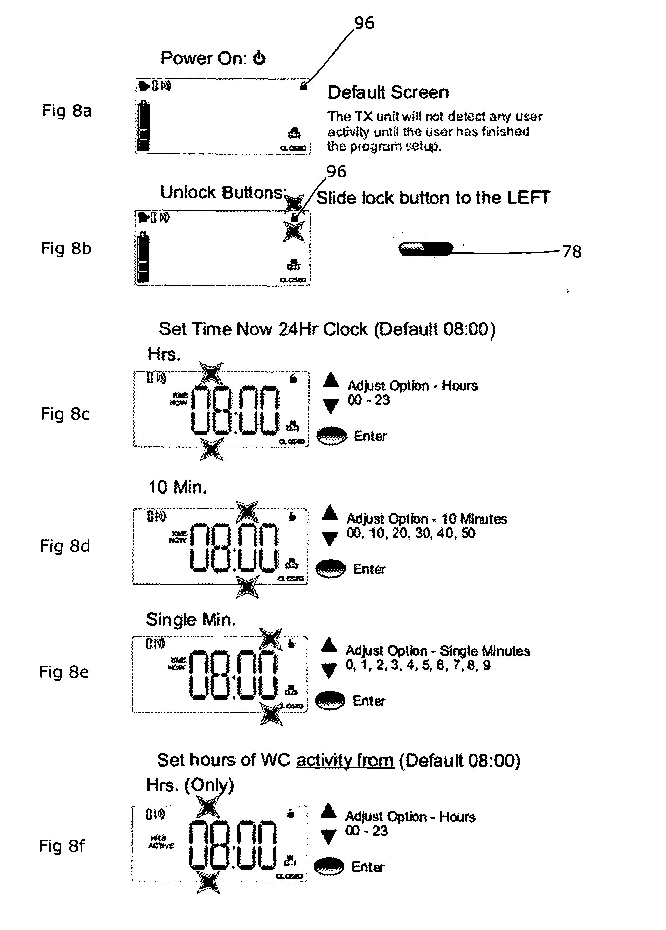

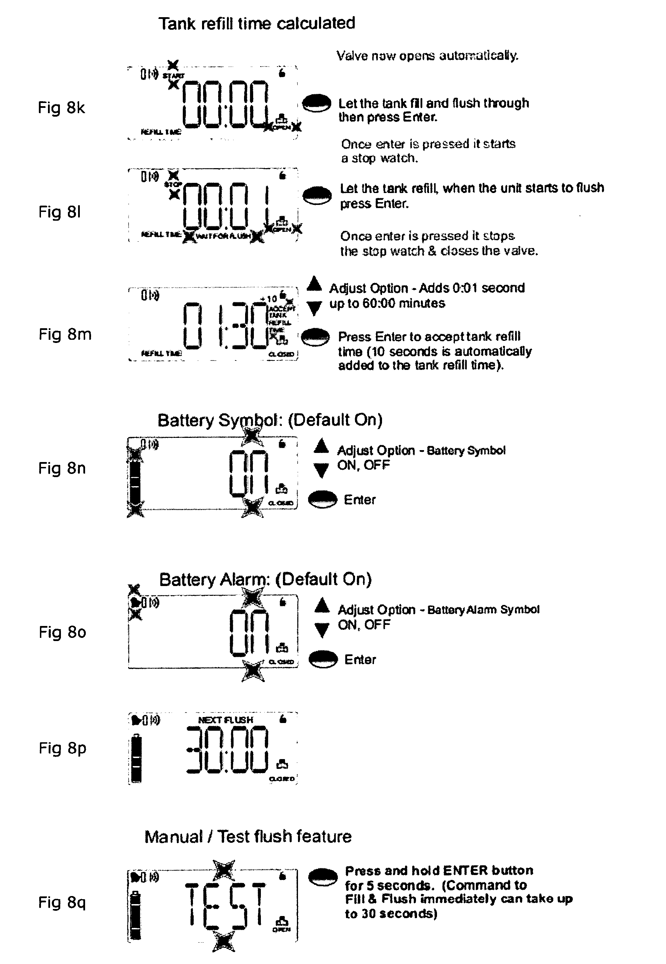

Figures 8a to 8q describe the programming steps required to set up the units. The first step is to ensure that both the receiver unit 10 and the transmitter unit 28 are set to the same channel via their respective channel select buttons 84, 79. Once this is done, both can communicate via the relevant RF channel, with the receiver unit 10 being able to receive data and "valve Open" signals from the transmitter unit 28. Then, the transmitter unit 28 is turned on via the main switch 34 on one side thereof and the power button 66. This gives a default screen shown in figure 8a in which icon 96 shows that the unit is locked. The lock button 78 must then be slid to the left in order to unlock the unit and activate a flashing unlocked icon 96. The unit can then be programmed. After completion of programming, the lock button 78 can be slid to the right in order to return the icon 96 to a steady locked indication.

To start programming, the programme button 68 is pressed and the unit asks the user to set the time. The up/down button 72/74 and the Enter button can be used to set the hour (figure 8c), tens of minutes (figure 8d), and units of minutes (figure 8e). At each stage, the Enter button 70 is pressed to move on.

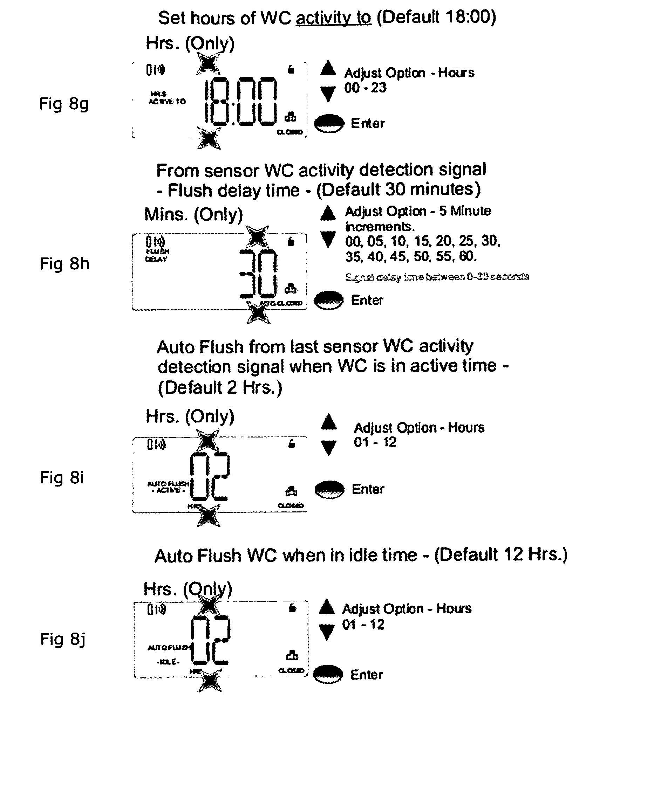

Having set the time, the unit then asks between what hours the convenience is assumed to be active. Figure 8f shows the unit allowing a start time to be set via the up/down buttons 72/74 and the Enter button 70, and figure 8g shows an end time being set in the same way.

The next function to set is the time in minutes between detecting a user via the sensor 40 and the activation of a flush. A default of 30 minutes is offered, which can be adjusted using the up/down buttons 72/74 in 5 minute increments between 0 minutes and 60 minutes. Once the operator is content, the Enter button 70 is pressed to confirm this.

Next, the unit asks what gap should exist between automatic flushes, i.e. the time period that should elapse after which the unit flushes the urinals automatically even if no user has been detected. A default of 2 hours is offered and this can be adjusted as before. Figure 8j allows adjustment of the automatic flush period during the idle time of the unit, i.e. outside the times set in figures 8f and 8g.

All of the above functions offer a default value, which is a general estimate of the typical input. Thus, apart from the time setting, if the usual values are to be applied then this can be done by pressing Enter at each stage to skip through and accept the defaults.

Figures 8k to 8m show the steps in calculating the necessary tank refill time. This requires the operator to hold the transmitter unit 28 and be in a position where they can see the cistern 50 or the urinal 52. Figure 8k shows the unit starting with suitable instructions to the operator. The unit sends a 'valve open' signal to the receiver unit 10, which opens the solenoid valve and allows water to flow. The cistern 50 then begins to fill; at some point this will complete the filling of the cistern and trigger a flush of the urinals. At this point, it is possible to be confident that the cistern is therefore empty. The operator therefore presses the 'Enter' button 70 when the flush begins, at which point the transmitter unit begins a timer and displays the time so far in seconds on the display. In time, the cistern will refill, and will flush the urinals again. At this point, the operator presses the 'Enter' button 70 again (Fig 8I), which stops the timer.

In this way, the time in seconds required to fill the cistern is determined. This can be used during the service life of the apparatus in order to open the solenoid valve for long enough to fill the cistern and trigger a flush, but not so long as might waste water unnecessarily.

Figure 8m shows the operator being given an opportunity to adjust the measured fill time in units of 1 second, using the up and down buttons 72, 74. In practice, the operator may be aware that he or she was a little early or late in starting or stopping the timer, and may wish to correct this. Once the 'Enter' button 70 is pressed a third time, 10 seconds is added to the adjusted time as a buffer to ensure complete filling at all times, and the resulting time is used as the tank refill time. This is transmitted to the receiver unit 10, which from then on defaults to closing the solenoid valve then that time has elapsed. This default mode of operation ensures that the valve is not left open in the event of a fault or transmission problem affecting the radio-frequency link between the units 10, 28.

Other settings which can then be adjusted are a battery symbol display, which can be turned off or on (figure 8n). The default is to display the battery symbol so that an exhausted or near-exhausted battery is apparent from inspection, which is the setting that is accepted by simply pressing the 'Enter' button 70. The up or down buttons 72, 764 can be used to adjust this before pressing the 'Enter' button 70, if desired. Next, the battery alarm setting is chosen (figure 8o) in the same way, the default being to display an icon when the battery level is too low or nearly so.

Programming is then complete, and the unit begins to run. At this point, the sensor is likely to detect the presence of the operator, which will trigger the timer prior to a flush. The unit will therefore display the time remaining until that flush, counting down from the time set at figure 8h towards zero at which point a "Valve open" signal is sent to the receiver unit 10.

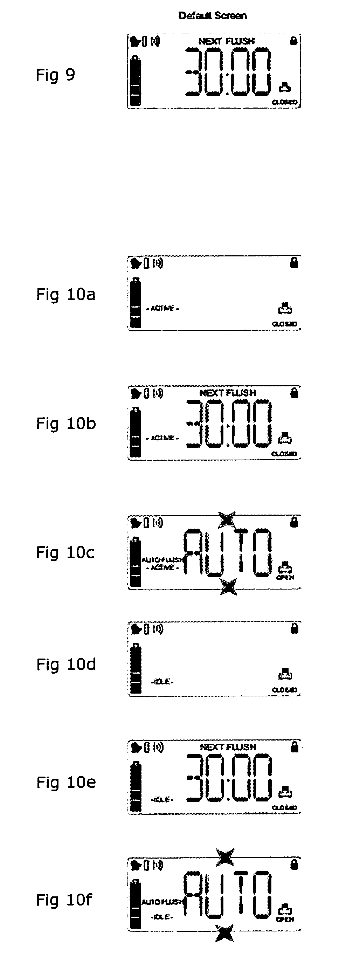

Figure 8q shows a manual or test flush feature. If the Enter button is pressed and held for 5 seconds whilst the unit is in its running state, then a "Valve Open" command is sent to the receiver unit immediately so that it can be tested. The unit then returns to its default screen, shown in figure 9.

Figures 10a to 10f then show the display presentations at various stages of operation. Figure 10a shows the active mode in which no users have been detected for some time, which is generally blank but with feedback as to the current status of the unit. Figure 10b then shows the active mode after a user has been detected via the sensor 40. The time to the next flush is displayed and counts down by each second to indicate when the flush is likely to take place. When this reaches zero, the AUTO message is shown as in figure 10c to show that an automatic flush is being carried out. At this point, the transmitter unit 28 sends a "Valve Open" signal to the receiver unit 10 via the radio-frequency link. After this, the unit then defaults back to its idle mode, shown again in figure 10d. After some time, a further user may be detected and the countdown begins again, figure 10e, until the flush time is reached, figure 10f.

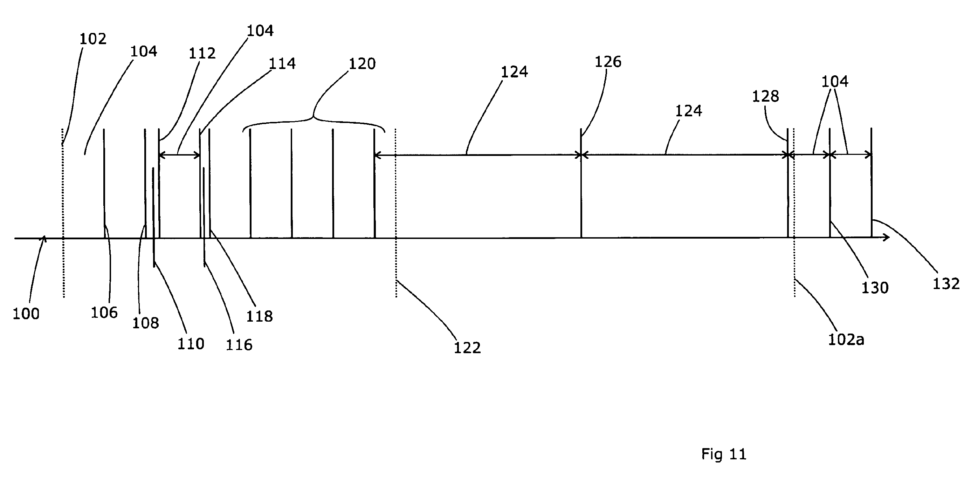

Figure 11 shows how this can be expected to operate in practice, using a timeline 100. When the time passes until the unit enters its active time 102, set at figure 8f, a default time period 104 is adopted after which an automatic flush 106 is carried out. Assuming that no users are detected for some time, a further automatic flush 108 then takes place after the same period has once again elapsed. Assuming that the sensor 40 detects a user at time 110, shortly after the automatic flush 108, the transmitter unit therefore waits for the delay time set in figure 8h before sending a Valve open signal to trigger a further automatic flush 112. The cistern then resets to the time period 104, after which an automatic flush 114 is carried out. Shortly after this, a further user 116 may be detected, in which case the delay time is again allowed to elapse before another automatic flush 118 is carried out. Assuming that no further users enter the convenience that day, further automatic flushes 120 take place at intervals corresponding to the pre-set period 104. At the end of the active day 122 (i.e. the time set at figure 8g) the unit defaults to the different automatic flush period set at figure 8j, which may have been set somewhat longer, as in this case. This period 124 then passes before an automatic flush 126 happens, late in the night. A further period 124 is allowed, after which another automatic flush 128 takes place. This takes the unit through to the following morning, shortly before the active time 102a is reached again. After this point, the shorter delay period 104 is allowed between automatic flushes 130, 132.

In practice, there could be a network of such appliances within a single washroom or a series of co-located washrooms. Multiple transmitter units could be arranged to use the same frequency, allowing for a single receiver to be triggered by any one of several transmitters. Alternatively, or in addition, receivers could monitor more than one frequency, allowing networks to co-exist within a washroom that would contain multiple channels of communication. This would allow for one transmitter or group of transmitters to activate one subset of receivers and for another transmitter or group of transmitters to activate a different subset of receivers, possibly overlapping with the first subset.

Receivers could be built into flush units, as described above, and/or into fragrance dispensers, sanitiser dispensers, light switches, hand dryers, taps, and the like.

It will of course be understood that many variations may be made to the above-described embodiment without departing from the scope of the present invention.

## Claims

1. A flush control system comprising;
a receiver unit comprising a radio-frequency receiver, an output for an actuator to enable flow of flush water when a flush signal is received via the radio-frequency receiver, a timer, and a memory; and
a transmitter unit comprising a radio-frequency transmitter compatible with the radio-frequency receiver of the receiver unit, and a control means for sending flush signals via the radio-frequency transmitter;
in which the receiver unit is adapted to disable flow of flush water after the timer indicates that a preset period retained in the memory has passed since the receiver unit enabled flow of flush water;
wherein the transmitter unit is adapted to communicate the preset period to the receiver unit, via the radio-frequency transmitter and radio-frequency receiver, by permitting a user to initiate a flush signal and by detecting an input from the user, establishing a time period between the initiation and the input, and communicating the preset period to the receiver unit on the basis of the time period.

2. A flush control system according to claim 1 in which the transmitter unit displays the time period to the user for adjustment before the preset period is communicated to the receiver unit.

3. A flush control system according to claim 1 in which the preset period is the time period plus a preset margin.

4. A flush control system according to claim 1 or claim 3 in which the transmitter unit displays the preset period to the user for adjustment before the preset period is communicated to the receiver unit.

5. A flush control system comprising; a receiver unit comprising a radio-frequency receiver and an output for an actuator to enable flow of flush water when a flush signal is received via the radio-frequency receiver; and
a transmitter unit comprising a radio-frequency transmitter compatible with the radio-frequency receiver of the receiver unit, and a control means for sending flush signals via the radio-frequency transmitter;
in which the transmitter unit comprises a clock and a memory in which is stored a start time of day, an end time of day, a first preset period and a second preset period, and the transmitter unit is adapted to, during the time period running from the start time to the end time, send a flush signal after the timer indicates that the first preset period has passed since the transmitter unit sent a flush signal, and, during the time period running from the end time to the start time, send a flush signal after the timer indicates that the second preset period has passed since the transmitter unit sent a flush signal.

6. A flush control system according to any one of the preceding claims further comprising a sensor for detecting a user and communicating with the transmitter unit, and in which the transmitter unit is adapted to send a flush signal after the sensor is activated.

7. A flush control system according to claim 6 in which the transmitter unit is adapted to send the flush signal after a preset period has elapsed after the sensor is activated.

8. A flush control system according to claim 6 or claim 7 in which the transmitter unit is adapted to activate other equipment after the sensor is activated.
